# EUROPÄISCHE PATENTSCHRIFT

(11) **EP 2 668 450 B1**
(45) Veröffentlichungstag und Bekanntmachung des Hinweises auf die Patenterteilung: **26.12.2018**
(21) Anmeldenummer: 12703019.5
(22) Anmeldetag: 27.01.2012
(51) Int. Cl.: F24H 1/12, F24H 9/00, F24H 9/18, B60H 1/22, F24H 1/00, H05B 3/24, F28D 9/00

(54) **WÄRMEÜBERTRAGER**
HEAT EXCHANGER
ÉCHANGEUR À CHALEUR

(30) Priorität: 28.01.2011 DE 102011003296
(43) Veröffentlichungstag der Anmeldung: 04.12.2013
(73) Patentinhaber: MAHLE Behr GmbH & Co. KG, 70469 Stuttgart (DE)
(72) Erfinder: KOHL, Michael, 74321 Bietigheim (DE); KRUMBACH, Karl-Gerd, 71576 Burgstetten (DE); SPRANGER, Thomas, 70619 Stuttgart (DE)
(74) Vertreter: Grauel, Andreas
(86) Internationale Anmeldenummer: PCT/EP2012/051387
(87) Internationale Veröffentlichungsnummer: WO 2012/101273

(56) Entgegenhaltungen:
- EP-A1- 1 921 896
- EP-A1- 1 921 896
- EP-A1- 2 353 898
- EP-A1- 2 353 898
- WO-A1-02/04879
- WO-A1-02/04879
- WO-A1-2010/025955
- WO-A1-2010/025955

## Beschreibung

Die Erfindung betrifft einen Wärmeübertrager gemäß dem Oberbegriff des Anspruches 1 und eine Kraftfahrzeugklimaanlage gemäß dem Oberbegriff des Anspruches 15.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft direkt oder indirekt zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen des Fluides, d. h. Luft oder Kühlmittel bzw. Wasser, vergrößert wird. In zunehmendem Maße werden Kraftfahrzeuge hergestellt, welche über einen ausschließlichen elektrischen Antrieb oder über einen Hybridantrieb verfügen. Die gesamte Heizleistung der Kraftfahrzeugklimaanlage muss deshalb von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 600 Volt anstelle von Niederspannung mit 12 Volt, zu betreiben. Hochspannung in einer Kraftfahrzeugklimaanlage stellt jedoch ein Sicherheitsproblem dar, weil beispielsweise durch eine menschliche Berührung von unter Hochspannung stehenden Teilen dem Menschen von der Hochspannung gesundheitlicher Schaden zugefügt werden kann. Es sind elektrische Heizeinrichtungen zum direkten Erwärmen der Luft als luftseitige Heizeinrichtungen als Wärmeübertrager bekannt und elektrische Heizeinrichtungen zum indirekten Erwärmen der Luft als kühlmittelseitige Heizeinrichtungen. Bei den kühlmittelseitigen Heizeinrichtungen als Wärmeübertrager wird die Wärme zunächst auf ein Kühlmittel bzw. Wasser abgegeben und anschließend das Kühlmittel zu einem Luft-Wasser-Wärmeübertrager geleitet, welcher die Wärme von dem Kühlmittel auf die Luft überträgt und damit die Luft erwärmt.

Darüber hinaus sind Wärmeübertrager in Scheibenbauweise zur Übertragung von Wärme von einem ersten Fluid auf ein zweites Fluid bekannt. Dabei durchströmt sowohl das erste als auch das zweite Fluid den Wärmeübertrager und die Wärme wird dabei von dem ersten auf das zweite Fluid übertragen oder umgekehrt. In einem Abgaswärmeübertrager wird Kühlmittel bzw. Kühlflüssigkeit als erstes Fluid durch einen ersten Fluidkanal und Abgas als zweites Fluid durch einen zweiten Fluidkanal des Wärmeübertragers geleitet. Damit kann Wärme von dem heißen Abgas auf das Kühlmittel übertragen werden und damit das Abgas gekühlt werden. Bei den Wärmeübertragern in Scheibenbauweise sind zwei Stapelscheiben zu einem Stapelscheibenpaar übereinander gestapelt. Vorzugsweise sind zusätzlich mehrere Stapelscheibenpaare übereinander gestapelt. Die Stapelscheibenpaare bestehen dabei aus einer oberen Stapelscheibe und einer unteren Stapelscheibe. Die Komponenten des Wärmeübertragers bestehen dabei im Allgemeinen aus Metall, insbesondere Aluminium, und sind im Allgemeinen stoffschlüssig mittels Löten miteinander verbunden.

Aus der DE 10 2006 033 313 A1 ist ein Wärmeübertrager bekannt. Der Wärmeübertrager weist Strömungskanäle auf, welche von einem gemeinsamen ersten Eintritt bis zu einem gemeinsamen ersten Austritt von einem ersten Fluid durchströmbar sind. Ein Gehäuse nimmt die Strömungskanäle auf und von einem zweiten Fluid ist der Wärmeübertrager ebenfalls durchströmbar mittels eines Ein- und Austrittbereiches für das zweite Fluid. Dabei sind innerhalb des Gehäuses Stapelscheibenpaare übereinander angeordnet und die Stapelscheibenpaare weisen jeweils eine Ober- und eine Unterscheibe auf. Die Ober- und Unterscheibe weist an den Längsseiten einen abgewinkelten Rand auf und die Ober- und Unterscheibe ist mittels der abgewinkelten Ränder an den Längsseiten miteinander verbunden, indem in den abgewinkelten Rändern an den Längsseiten der Ober- und Unterscheibe miteinander verlötet sind.

Die EP 1 872 986 A1 zeigt eine elektrische Heizvorrichtung, umfassend ein Gehäuse, in welchem eine Trennwand ausgebildet ist, die das Gehäuse in einer Heizkammer und eine ein Medium aufnehmende Zirkulationskammer, die von dem Medium durchströmt wird, unterteilt. Ferner umfasst die elektrische Heizvorrichtung eine Einlassöffnung zum Einführen des Mediums in die Zirkulationskammer und eine Auslassöffnung zum Ausführen des erwärmten Mediums aus der Zirkulationskammer, wobei ein elektrisches Heizelement in der Kammer aufgenommen ist.

Die Aufgabe der vorliegenden Erfindung besteht deshalb darin, einen Wärmeübertrager und eine Kraftfahrzeugklimaanlage zur Verfügung zu stellen, der einfach und preiswert in der Herstellung ist sowie einen kompakten Aufbau aufweist und zuverlässig im Betrieb arbeitet.

Diese Aufgabe wird gelöst mit einem Wärmeübertrager gemäß Anspruch 1.

Die aus dem Stand der Technik bekannten Wärmeübertrager weisen einen ersten und einen zweiten Fluidkanal zum Durchleiten von zwei unterschiedlichen Fluiden auf, so dass von einem Fluid auf ein anderes Fluid Wärme übertragen werden kann. Wärmeübertrager in Scheibenbauweise sind im Aufbau besonders kompakt und in der Herstellung einfach und preiswert. Diese Vorteile eines aus dem Stand der Technik bekannten Wärmeübertragers zur Übertragung von Wärme von einem Fluid auf ein anderes Fluid kann dadurch ausgenützt werden, dass der Wärmeübertrager in Scheibenbauweise nur einen Fluidkanal zum Durchleiten eines Fluides aufweist und an einer Stapelscheibe wenigstens eines Stapelscheibenpaares ein elektrisches Widerstandheizelement angeordnet ist, so dass mit elektrischem Strom das durch den nur einen Fluidkanal des Wärmeübertragers durchgeleiteten Fluides, insbesondere Wasser und/oder Kühlmittel, wobei Kühlmittel insbesondere ein mit Frostschutzmittel versehenes Wasser ist, von durch das elektrische Widerstandsheizelement geleiteten elektrischen Strom erwärmt werden kann. Die Vorteile der Wärmeübertrager in Scheibenbauweise mit zwei Fluidkanälen können somit auch für Wärmeübertrager zum Erwärmen eines Fluides mit elektrischem Strom genutzt werden.

Erfindungsgemäß ist das wenigstens eine elektrische Widerstandsheizelement ein PTC-Element.

Erfindungsgemäß ist das wenigstens eine elektrische Widerstandsheizelement scheibenförmig und eine von dem wenigstens einen elektrischen Widerstandsheizelement aufgespannte fiktive Ebene ist im Wesentlichen parallel zu einer von den Stapelscheiben aufgespannten fiktiven Ebene ausgerichtet. Scheibenförmig ausgebildet bedeutet dabei vorzugsweise, dass die Ausdehnung des elektrischen Widerstandsheizelementes in Richtung der fiktiven Ebene wesentlich größer, z. B. wenigstens das 2-, 3-, 5-, 10- oder 20-Fache, größer ist als senkrecht zu der fiktiven Ebene. Vorzugsweise ist auch die Ausdehnung der Stapelscheiben in Richtung der fiktiven Ebene, welche von den Stapelscheiben aufgespannt ist, größer, z. B. wenigstens um das 2-, 3-, 5-, 10- oder 20-Fache größer als die Ausdehnung der Stapelscheiben senkrecht zu der fiktiven Ebene. Im Wesentlichen parallel bedeutet vorzugsweise, dass die von dem wenigstens einen elektrischen Widerstandsheizelement und den Stapelscheiben aufgespannten fiktiven Ebenen mit einer Abweichung von weniger als 20°, 10°, 5° oder 2° parallel zueinander ausgerichtet sind.

Erfindungsgemäß umfasst der Wärmeübertrager wenigstens zwei mit dem wenigstens einen elektrischen Widerstandsheizelement elektrisch verbundene Leiter, insbesondere Leiterplatten, um elektrischen Strom durch das wenigstens eine elektrische Widerstandsheizelement zu leiten und dadurch das elektrische Widerstandsheizelement zu erwärmen und/oder die zwei Stapelscheiben des wenigstens einen Stapelscheibenpaares sind mit einer Lötverbindung miteinander fluiddicht verbunden und/oder zwischen den beiden Stapelscheiben des wenigstens einen Stapelscheibenpaares ist eine Turbulenzeinlage, z. B. ein Turbulenzblech, angeordnet. Zweckmäßig sind die zwei Stapelscheiben des wenigstens einen Stapelscheibenpaares form- und/oder kraftschlüssig, z. B. mit einer dazwischen liegenden Dichtung, miteinander verbunden und die beiden Stapelscheiben sind senkrecht zu der fiktiven Ebene der Stapelscheiben unter einer Druckspannung zueinander angeordnet bzw. liegen unter einer Druckspannung aufeinander, insbesondere an einem Rand, insbesondere Bord, der Stapelscheiben. Vorzugsweise ist die Lötverbindung an einem Bord, insbesondere am Randbereich der Stapelscheiben, ausgebildet.

Erfindungsgemäß umfasst der Wärmeübertrager wenigstens ein elektrisches Isolierelement, insbesondere eine Isolierplatte, welches die wenigstens zwei Leiter und vorzugsweise das wenigstens eine elektrische Widerstandsheizelement elektrisch isoliert. Der Wärmeübertrager wird vorzugsweise mit Hochspannung, z. B. mit einer Spannung von wenigstens 60 V oder 300 V betrieben. Hierzu muss der Wärmeübertrager hochspannungstauglich sein, so dass die Komponenten, welche unter elektrischem Strom stehen, elektrisch zu isolieren sind. Hier wird das wenigstens eine elektrische Isolierelement eingesetzt.

In einer Variante ist eine von den Leiterplatten aufgespannte fiktive Ebene und/oder eine von der wenigstens einen Isolierplatte aufgespannte fiktive Ebene im Wesentlichen parallel zu einer von den Stapelscheiben aufgespannten fiktiven Ebene ausgerichtet. Im Wesentlichen parallel bedeutet vorzugsweise, dass die von den Leiterplatten und den Isolierplatten aufgespannten fiktiven Ebenen mit einer Abweichung von weniger als 20°, 10°, 5° oder 2° parallel zueinander ausgerichtet sind.

Zweckmäßig ist ein Heizverbund mit dem wenigstens einen elektrischen Isolierelement, den wenigstens zwei Leitern und dem wenigstens einen elektrischen Widerstandsheizelement außenseitig an einer Stapelscheibe außerhalb des Fluidkanales angeordnet, vorzugsweise liegt wenigstens ein elektrisches Isolierelement außenseitig auf einer Stapelscheibe auf.

In einer weiteren Ausführungsform ist das wenigstens eine elektrische Widerstandsheizelement zwischen zwei Leitern angeordnet und die zwei Leiter sind zwischen wenigstens zwei elektrischen Isolierelementen angeordnet.

Insbesondere beträgt die Ausdehnung des wenigstens einen elektrischen Widerstandsheizelementes oder die Summe der Ausdehnungen von wenigstens zwei elektrischen Widerstandsheizelementen in einer ersten und zweiten Richtung, wobei die erste und zweite Richtung parallel zu einer von den Stapelscheiben aufgespannten Ebene ausgerichtet und die erste und zweite Richtung senkrecht zueinander ausgerichtet sind, wenigstens 50%, 60% oder 80% der Ausdehnung der Stapelscheiben in der ersten und zweiten Richtung.

In einer weiteren Ausgestaltung ist die Ausdehnung des Fluidkanales in Richtung einer von den Stapelscheiben aufgespannten fiktiven Eben wesentlich größer, z. B. um das 2-, 3-, 5- oder 10-Fache größer, als die Ausdehnung des Fluidkanales senkrecht zu der von den Stapelscheiben aufgespannten Ebene.

In einer ergänzenden Variante ist das wenigstens eine elektrische Widerstandsheizelement, insbesondere der Heizverbund, zwischen zwei Stapelscheibenpaaren angeordnet und das elektrische Widerstandsheizelement ist thermisch und/oder mechanisch mit den zwei Stapelscheibenpaaren verbunden und vorzugsweise ist das wenigstens eine elektrische Widerstandsheizelement, insbesondere der Heizverbund, zwischen den zwei Stapelscheibenpaaren fluiddicht bezüglich der Umgebung eingeschlossen. Der Heizverbund ist vorzugsweise fluiddicht zwischen den Stapelscheiben eingeschlossen, so dass aus der Umgebung des Wärmeübertragers beispielsweise kein Wasser oder Staub zu dem Heizverbund gelangen kann.

In einer zusätzlichen Ausgestaltung ist der Heizverbund fluiddicht bezüglich der Umgebung eingeschlossen, z. B. mit einem Heizverbundgehäuse, einem erhärteten Gel oder einer anderen Abdichteinrichtung.

In einer weiteren Variante weist ein Stapelscheibenpaar eine Öffnung auf und durch die Öffnung sind wenigstens zwei Kontaktelektroden zur elektrischen Kontaktierung der wenigstens zwei Leiter geführt.

In einer weiteren Ausgestaltung sind die zwei Stapelscheibenpaare stoffschlüssig, z. B. mit einer Klebe- oder Silikonverbindung, und/oder form- und/oder kraftschlüssig aufgrund einer Druckkraft zwischen den beiden Stapelscheibenpaaren miteinander verbunden und vorzugsweise ist die Druckkraft mit wenigstens einem Verbindungselement, z. B. einer Schraub- oder Nietverbindung, zwischen den beiden Stapelscheibenpaaren aufgebracht.

Insbesondere ist an dem Stapelscheibenpaar mit der Öffnung eine Leistungselektronik mit einem Leistungselektronikgehäuse angeordnet und vorzugsweise ist zwischen der Leistungselektronik und einer Stapelscheibe des Stapelscheibenpaares mit der Öffnung eine Adapterplatte angeordnet.

Erfindungsgemäße Kraftfahrzeugklimaanlage, umfassend ein Gehäuse, ein Gebläse, einen Luft-Wasser-Wärmeübertrager zur Erwärmung der Luft mit durch den Luft-Wasser-Wärmeübertrager geleitetem Wasser, vorzugsweise einen Wasserkreislauf, vorzugsweise einen Kältemittelverdampfer zum Kühlen der durch einen Luftkanal geleiteten Luft, vorzugsweise eine Luftklappe, vorzugsweise einen von dem Gehäuse begrenzten Luftkanal, wobei die Kraftfahrzeugklimaanlage einen in dieser Schutzrechtsanmeldung beschriebenen Wärmeübertrager umfasst und mit dem Wärmeübertrager das durch den Luft-Wasser-Wärmeübertrager geleitete Wasser erwärmbar ist, insbesondere indem mit dem Wasserkreislauf das Wasser durch den Wärmeübertrager und den Luft-Wasser-Wärmeübertrager leitbar ist, z. B. mit einer Pumpe.

Zweckmäßig ist der Luft-Wasser-Wärmeübertrager und vorzugsweise der Kältemittelverdampfer innerhalb des Luftkanales angeordnet.

In einer weiteren Ausführungsform umfasst das wenigstens eine elektrische Isolierelement wärmeübertragende oder wärmeleitende Partikel, z. B. Aluminiumoxid und/oder Siliziumkarbid und/oder Bornitrid. Dadurch kann die Wärmeleitfähigkeit des wenigstens einen elektrischen Isolierelementes erhöht werden und trotzdem weist das wenigstens eine elektrische Isolierelement eine ausreichend große elektrische Isolation auf.

Zweckmäßig besteht das wenigstens eine elektrische Isolierelement aus einem elektrisch isolierenden und thermisch leitfähigen Material, z. B. Keramik.

In einer zusätzlichen Variante weist der Wärmeübertrager eine IP-Schutzklasse von 67 auf, so dass eine ausreichende Wasserdichtheit und Staubdichtheit vorhanden ist.

In einer weiteren Ausgestaltung sind die Turbulenzeinlage und die Stapelscheiben mittels Kleben und/oder Löten und/oder kraftschlüssig unter Vorspannung miteinander verbunden.

Insbesondere sind die zwei Stapelscheiben des wenigstens einen Stapelscheibenpaares kraft- und/oder formschlüssig, z. B. mit einem Dichtring an dem Rand, insbesondere Bord, unter Vorspannung, miteinander verbunden.

In einer weiteren Ausgestaltung weist die wenigstens eine Stapelscheibe als Wärmeleitelement und/oder das wenigstens eine elektrische Isolierelement eine Wärmeleitfähigkeit von wenigstens 1 W/mK, insbesondere wenigstens 15 W/mK auf.

In einer weiteren Ausführungsform weist das wenigstens eine elektrische Isolierelement eine elektrische Isolation von wenigstens 1 kV/mm, insbesondere wenigstens 25 kV/mm auf.

In einer Variante weist das wenigstens eine elektrische Isolierelement, vorzugsweise senkrecht zu der fiktiven Ebene, eine Durchschlagfestigkeit von wenigstens 1 kV auf.

In einer weiteren Ausgestaltung weist das wenigstens eine elektrische Isolierelement eine Wärmeleitfähigkeit von wenigstens 1 W/mK, insbesondere wenigstens 15 W/mK auf. Das wenigstens eine elektrische Isolierelement kann damit einerseits gut elektrisch isolieren und kann andererseits ausreichend gut die Wärme von dem elektrischen Widerstandsheizelement zu dem Wärmeleitelement bzw. der Stapelscheibe leiten.

Zweckmäßig weisen die Komponenten des Wärmeübertragers eine Plattierung mit Lot auf zur stoffschlüssigen Verbindung der Komponenten des Wärmeübertragers mittels Löten in einem Lötofen.

In einer zusätzlichen Ausführungsform weisen die obere und/oder untere Adapterplatte eine größere, vorzugsweise um das wenigstens 1,5-, 2-, 3- oder 5-Fache größere, Dicke auf als die Stapelscheiben des wenigstens einen Stapelscheibenpaares.

Zweckmäßig weist der Wärmeübertrager eine elektrische Heizleistung von wenigstens 1,5 kW, 3 kW oder 5 kW auf.

In einer weiteren Ausgestaltung umfasst der Wärmeübertrager zwei elektrische Widerstandsheizelemente und vier Kontaktelektroden, so dass der Wärmeübertrager zwei unterschiedliche elektrische Heizleistungen aufweist. Insbesondere umfasst ein elektrisches Widerstandsheizelement mehrere PTC-Elemente.

Vorzugsweise ist der Wärmeübertrager hochspannungstauglich und/oder betreibbar für Spannungen von wenigstens 60 V, 100 V oder 300 V.

In einer Variante sind die Stapelscheiben des wenigstens einen Stapelscheibenpaares im Wesentlichen, z. B. mit einer Abweichung von weniger als 10°, 5° oder 2°, parallel übereinander angeordnet.

In einer ergänzenden Ausführungsform bestehen die Komponenten, insbesondere die Stapelscheiben, und/oder die Adapterplatte und/oder Turbulenzeinlage und/oder der Ein- und Auslassstutzen des Wärmeübertragers wenigstens teilweise, insbesondere vollständig, aus Metall, insbesondere Aluminium oder Stahl, z. B. Edelstahl.

Im Nachfolgenden werden ein Ausführungsbeispiele der Erfindung unter Bezugnahme auf die beigefügten Zeichnungen näher beschrieben. Es zeigt:
- Fig. 1: eine Explosionsdarstellung eines Wärmeübertragers in einem ersten Ausführungsbeispiel,
- Fig. 2: eine Explosionsdarstellung eines Teils des Wärmeübertragers gemäß Fig. 1 mit Turbulenzeinlagen,
- Fig. 3: eine Explosionsdarstellung eines Heizverbundes des Wärmeübertragers gemäß Fig. 1,
- Fig. 4: eine perspektivische Ansicht des Wärmeübertragers gemäß Fig. 1,
- Fig. 5: einen Querschnitt des Wärmeübertragers gemäß Fig. 1 und
- Fig. 6: eine Explosionsdarstellung des Wärmeübertragers in einem zweiten Ausführungsbeispiel.

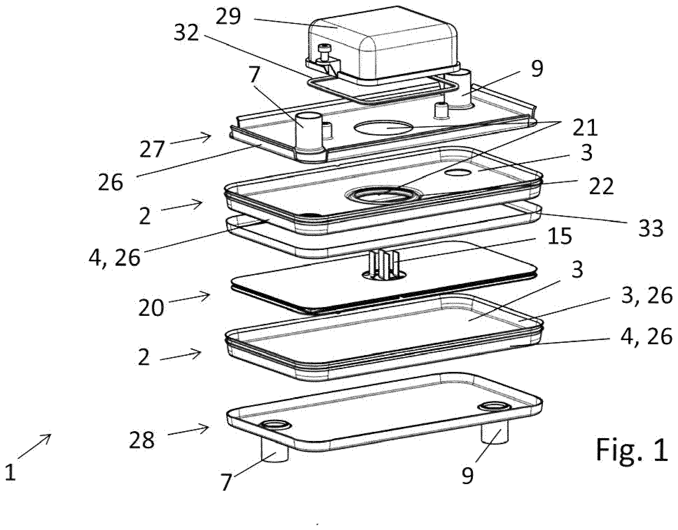

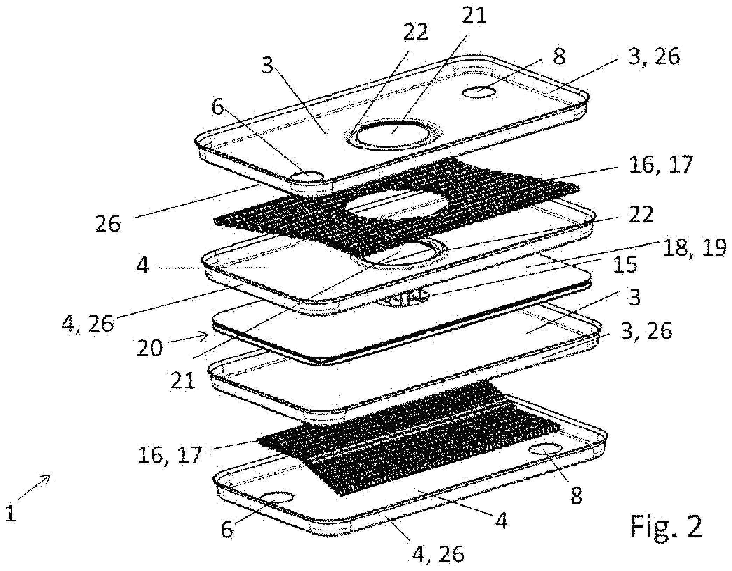

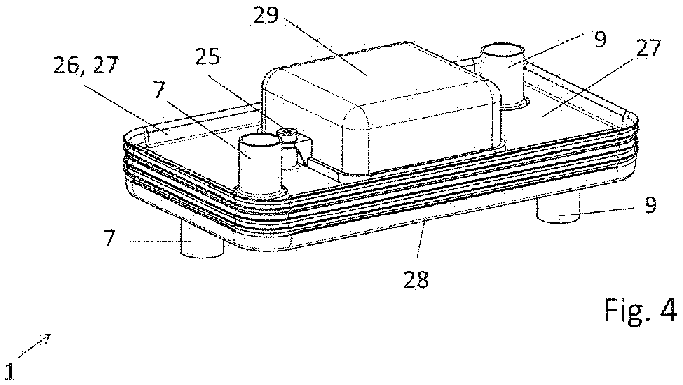

In den Fig. 1 bis 5 ist ein Wärmeübertrager 1 in Scheibenbauweise in einem ersten Ausführungsbeispiel dargestellt. Der Wärmeübertrager 1 weist nur einen Fluidkanal 5 zum Durchleiten eines Fluides, insbesondere Kühlmittel, d. h. beispielsweise mit Frostschutzmittel versetztes Wasser, auf. Der Wärmeübertrager 1 wird in einer nicht dargestellten Kraftfahrzeugklimaanlage eingesetzt, um durch den Wärmeübertrager 1, d. h. durch den nur einen Fluidkanal 5 Kühlmittel zu leiten, dieses Kühlmittel am Wärmeübertrager 1 mit elektrischen Strom zu erwärmen, so dass anschließend das durch den Wärmeübertrager 1 geleitete und erwärmte Kühlmittel durch einen Luft-Wasser-Wärmeübertrager geleitet werden kann. Der Luft-Wasser-Wärmeübertrager (nicht dargestellt) der nicht dargestellten Kraftfahrzeugklimaanlage ist in einem Luftkanal am Gehäuse der Kraftfahrzeugklimaanlage angeordnet und durch diesen Luft-Wasser-Wärmeübertrager wird das Kühlmittel als auch Luft geleitet, so dass mit dem an dem Wärmeübertrager 1 erwärmten Kühlmittel die durch den Luft-Wasser-Wärmeübertrager geleitete Luft erwärmt und anschließend einem Innenraum eines Kraftfahrzeuges zugeführt werden kann. Zusätzlich kann beispielsweise auch mit dem erwärmten Kühlmittel am Wärmeübertrager 1 auch eine Batterie eines Kraftfahrzeuges erwärmt werden.

Der Wärmeübertrager 1 umfasst zwei Stapelscheibenpaare 2, jeweils mit einer oberen Stapelscheibe 3 und einer unteren Stapelscheibe 4 aus Aluminium. Die Stapelscheiben 3, 4 weisen im Randbereich ein Bord 26 auf. Ferner umfasst der Wärmeübertrager 1 eine obere Adapterplatte 27 und eine untere Adapterplatte 28 aus Aluminium. Auch die obere und untere Adapterplatte 27, 28 weist am Randbereich das Bord 26 auf. Die obere und untere Adapterplatte 27, 28 weist jeweils einen Einlassstutzen 7 und einen Auslassstutzen 9 sowie daran ausgebildet jeweils eine Einlassöffnung 6 und eine Auslassöffnung 8 auf zum Ein- und Ausleiten des Fluides, nämlich Wasser, in den Fluidkanal 5. Die obere Stapelscheibe 3 des oberen Stapelscheibenpaares 2 weist ebenfalls eine Ein- und Auslassöffnung 6, 8 und die untere Stapelscheibe 4 des unteren Stapelscheibenpaares 2 weist ebenfalls die Ein- und Auslassöffnung 6, 8 auf. In analoger Weise weist auch die untere Adapterplatte 28 den Einlass- und Auslassstutzen 7, 9 sowie jeweils daran ausgebildet die Ein- und Auslassöffnung 6, 8 auf.

Bei der Herstellung des Wärmeübertragers 1 werden zunächst zwischen der oberen und unteren Stapelscheibe 3, 4 eine als Turbulenzblech 17 ausgebildete Turbulenzeinlage 16 eingelegt, anschließend werden die beiden oberen und unteren Stapelscheiben 3, 4 aufeinandergelegt, so dass diese nur an dem Bord 26 aufeinanderliegen. Anschließend wird auf die obere Stapelscheibe 3 des oberen Stapelscheibenpaares 2 die obere Adapterplatte 27 aufgelegt, so dass die obere Adapterplatte 27 auch mit dem Bord 26 am Bord 26 der oberen Stapelscheibe 3 aufliegt. In analoger Weise wird auch das untere Stapelscheibenpaar 2 hergestellt, indem die beiden Stapelscheibenpaare 3, 4 jeweils an dem Bord 26 aufeinandergelegt werden und dazwisehen das Turbulenzblech 17 eingelegt wird. Am unteren Stapelscheibenpaar 3 wird ferner in analoger Weise auf die untere Stapelscheibe 4 die untere Adapterplatte 28 aufgelegt, so dass das Bord 26 der unteren Adapterplatte 28 am Bord 26 der unteren Stapelscheibe 4 aufliegt. Die Stapelscheiben 3, 4 als auch die Adapterplatten 27, 28 sind mit einem Lot plattiert. Die beiden Stapelscheibenpaare 2, jeweils mit der oberen oder unteren Adapterplatte 27, 28 werden anschließend in einem Lötofen miteinander verlötet, so dass die beiden Stapelscheiben 3, 4 an dem Bord 26 fluiddicht miteinander verlötet sind. Zwischen den Adapterplatten 27, 28 und der oberen Stapelscheibe 3 bzw. der unteren Stapelscheibe 4 ist keine Turbulenzeinlage 16 angeordnet, so dass die Adapterplatten 27, 28 vollflächig mit den Stapelscheiben 3, 4 verlötet werden. Die beiden Stapelscheiben 3, 4 werden abweichend hiervon lediglich an dem Bord 26 miteinander verlötet, weil zwischen den Stapelscheiben 3, 4 das Turbulenzblech 17 angeordnet ist. Zwischen den Stapelscheiben 3, 4 entsteht somit der fluiddichte Fluidkanal 5 in jedem Stapelscheibenpaar 2. Mit der Turbulenzeinlage 16 kann die thermische Leistungsfähigkeit des Wärmeübertragers 1 verbessert werden, weil dadurch die Oberfläche des Wärmeübertragers 1 innerhalb des Fluidkanales 5 zur Übertragung von Wärme auf das Fluid erhöht ist. Die Einlassstutzen 7 und die Auslassstutzen 9 sind jeweils an den Adapterplatten 27, 28 ausgebildet und durch die Einlassstutzen 7 bzw. die Einlassöffnungen 6 kann das Fluid in den Fluidkanal 5 eingeleitet und durch den Auslassstutzen 9 bzw. die Auslassöffnungen 8 wieder ausgeleitet werden.

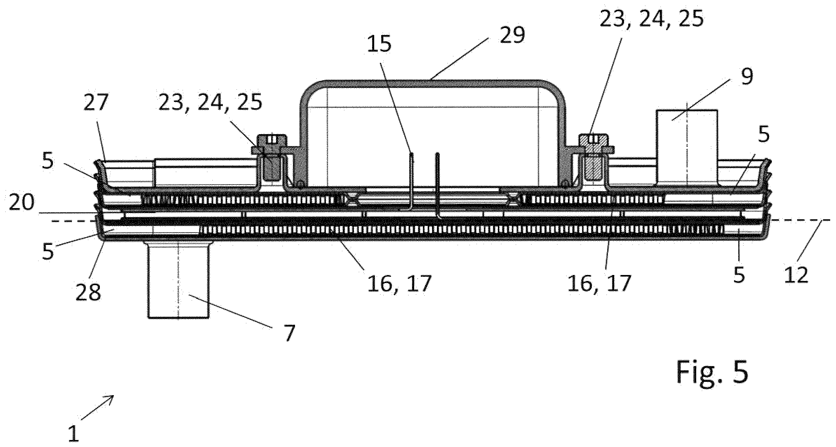

Der Fluidkanal 5 im oberen Stapelscheibenpaar 2 und der Fluidkanal 5 im unteren Stapelscheibenpaar 2 sind dabei mit nicht dargestellten Rohrleitungen fluidleitend in Reihe oder parallel geschaltet. Der Wärmeübertrager 1 weist somit nur einen Fluidkanal 5 zum Durchleiten von nur einem Fluid auf. Unter Berücksichtigung dieser Rohrleitung weist der Wärmeübertrager 1 auch nur eine Einlassöffnung 6 zum Einleiten des Fluides und nur eine Auslassöffnung 8 zum Ausleiten des nur einen Fluides auf. Die Turbulenzeinlage 16 kann ferner dazu benutzt werden, um einen gewünschten Druckabfall im Fluidkanal 5 zu erzeugen bzw. eine turbulente Strömung. Zwischen den beiden Stapelscheiben 3, 4 besteht somit kein diskreter Kanal, sondern ein großräumiger Fluidkanal 5. Die Ein- und Auslassstutzen 7, 9 sind dabei vorzugsweise rotationssymmetrisch zu einer Achse ausgerichtet (nicht dargestellt), wobei die Achse senkrecht zu einer von der Stapelscheiben 3, 4 aufgespannten fiktiven Ebene 12 (Fig. 5) ausgerichtet ist. Die Turbulenzeinlagen 16 ermöglichen außerdem eine ebene Ausrichtung der Stapelscheiben 3, 4, weil an den Turbulenzeinlagen 16 die beiden Stapelscheiben 3, 4 unter einer geringen Vorspannung großflächig aufeinanderliegen.

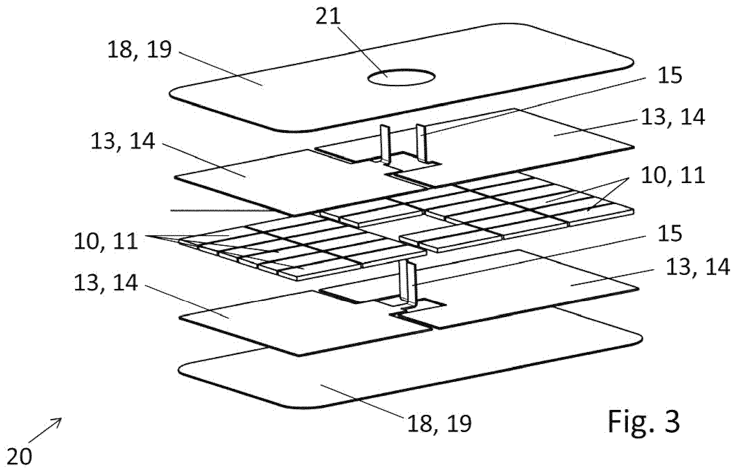

Das durch den Fluidkanal 5 geleitete Wasser wird in dem Wärmeübertrager 1 mit elektrischem Strom erwärmt. Hierzu ist der Wärmeübertrager 1 mit PTC-Elementen 11 als Widerstandsheizelementen 10 versehen. Die elektrischen Widerstandsheizelemente 10 bzw. die PTC-Elemente 11 sind dabei scheibenförmig ausgebildet und im Wesentlichen parallel zu der fiktiven Ebene 12 ausgerichtet. Die fiktive Ebene 12 steht dabei senkrecht zu der Zeichenebene von Fig. 5. Die PTC-Elemente 11 sind zwischen zwei als Leiterplatten 14 ausgebildeten Leitern 13 angeordnet. An jeder der Leiterplatten 14 ist eine Kontaktelektrode 15 ausgebildet. Dabei weist der Wärmeübertrager 1 vier Kontaktelektroden 15 auf. Die in Fig. 3 oben dargestellten beiden Leiterplatten 14 stellen dabei beispielsweise den Pluspol dar und die beiden unten angeordneten Leiterplatten 14 bilden beispielsweise den Minuspol. Dadurch ist der Wärmeübertrager 1 zweistufig, d. h. dass in einer ersten Stufe nur ungefähr die Hälfte der PTC-Elemente 11 bestromt wird und in einer zweiten Stufe sämtliche PTC-Elemente 11 bestromt werden. Dadurch weist der Wärmeübertrager 1 beispielsweise eine elektrische Wärmeleistung von 2,5 kW in der ersten Stufe und von 5 kW in der zweiten Stufe auf. Die Leiterplatten 14 als auch die PTC-Elemente 11 sind ferner zwischen zwei als Isolierplatten 19 ausgebildeten Isolierelementen 18 angeordnet. Mit den Isolierplatten 19 werden die Leiterplatten 14 und damit auch die PTC-Elemente 11 elektrisch bezüglich der Stapelscheiben 3, 4 aus Aluminium elektrisch isoliert.

Die elektrischen Widerstandsheizelemente 10 als PTC-Elemente 11 sind mit den Leiterplatten 14 aufgrund einer Druckvorspannung zwischen den Leiterplatten 14 kraftschlüssig befestigt. Vorzugsweise weisen hierzu die Leiterplatten 14 nicht dargestellte Ausprägungen auf. Abweichend hiervon bzw. ergänzend kann zwischen den Leiterplatten 14 und den PTC-Elementen 11 auch ein elastischer Silikonkleber angeordnet sein und bei der Ausbildung einer Druckvorspannung zwischen den oberen und unteren Leiterplatten 14 sowie den dazwischen angeordneten PTC-Elementen 11 wird der Silikonkleber verdrängt, so dass ein unmittelbarer mechanischer Kontakt zwischen den Leiterplatten 14 und den PTC-Elementen 11 besteht und damit auch eine elektrische Verbindung zwischen den Leiterplatten 14 und den PTC-Elementen 11 aufgebaut ist.

Die Leiterplatten 14, die PTC-Elemente 11 und die Isolierplatte 19 bilden dabei einen Heizverbund 20. Der Heizverbund 20 ist zwischen dem oberen Stapelscheibenpaar 2 und dem unteren Stapelscheibenpaar 2 angeordnet, d. h. zwischen den unteren Stapelscheiben 4 des oberen Stapelscheibenpaares 2 und der oberen Stapelscheiben 3 des unteren Stapelscheibenpaares 2. Die Stapelscheiben 3, 4 des oberen Stapelscheibenpaares 2, die Turbulenzeinlage 16 in dem oberen Stapelscheibenpaar 2 und die obere Adapterplatte 27 weisen jeweils fluchtend eine Öffnung 21 auf. Die Öffnung 21 an den beiden Stapelscheiben 3, 4 des oberen Stapelscheibenpaares 2 ist dabei an einer oder beiden Stapelscheiben 3, 4 mit einer Sicke 22 versehen. An der Sicke 22 im Bereich der Öffnung 21 liegen die beiden Stapelscheiben 3, 4 des oberen Stapelscheibenpaares 2 aufeinander und beim Verlöten der beiden Stapelscheiben 3, 4 des oberen Stapelscheibenpaares 3 wird die Öffnung 21 fluiddicht an der Sicke 22 verlötet, so dass der Fluidkanal 5 bezüglich der Öffnung 21 fluiddicht abgedichtet ist. Die Kontaktelektroden 15 ragen durch die Öffnungen 21 in dem oberen Stapelscheibenpaar 2, der oberen Adapterplatte 27 und in dem Turbulenzblech 17 aufgrund ihrer Geometrie in einen von einem Leistungselektronikgehäuse 29 eingeschlossen Raum und können dadurch von der nicht dargestellten Leistungselektronik innerhalb des Leistungselektronikgehäuses 29, d. h. in dem von dem Leistungselektronikgehäuse 29 eingeschlossenen Raum, kontaktiert werden (Fig. 5).

An der oberen Adapterplatte 27 ist ein Leistungselektronikgehäuse 29 mit einer nicht dargestellten Leistungselektronik zur Bestromung der PTC-Elemente 11 angeordnet. Das Leistungseiektronikgehäuse 29 ist mit einer Dichtung 32 (Fig. 1) fluiddicht mit der oberen Adapterplatte 27 verbunden, indem mit einer Schraube 25 (Fig. 5) das Leistungselektronikgehäuse 29 aus Kunststoff mit der oberen Adapterplatte 27 verschraubt ist, so dass das Leistungselektronikgehäuse 29 unter einer Vorspannung mittelbar unter Anordnung bzw. Zwischenanordnung der Dichtung 32 auf der oberen Adapterplatte 27 aufliegt. Die Schraube 25 stellt somit bzw. bildet eine Schraubverbindung 24 als Verbindungselement 23 zwischen dem Leistungselektronikgehäuse 29 und der oberen Adapterplatte 27. Die obere oder untere Adapterplatte 27, 28 kann auch eine nicht dargestellte Fixierungseinrichtung zur Befestigung des Wärmeübertragers, z. B. an einer Karosserie eines Kraftfahrzeuges, aufweisen.

Das verlötete obere Stapelscheibenpaar 2 mit der oberen Adapterplatte 27 und das verlötete untere Stapelscheibenpaar 2 mit der unteren Adapterplatte 28 werden nach dem Verlöten in dem Lötofen unter Zwischenanordnung des Heizverbundes 20 mit dem Klebstoffdichtring 33 (Fig. 1), z. B. einem Silikonklebstoff, stoffschlüssig und fluiddicht miteinander verbunden. Dadurch ist der Heizverbund 20 zwischen den beiden Stapelscheibenpaaren 2 fluiddicht bezüglich der Umgebung abgedichtet, so dass zu dem Heizverbund 20 kein Staub oder kein Wasser gelangen kann. Der Klebstoffdichtring 33 liegt dabei an dem Bord der unteren Stapelscheibe 4 des oberen Stapelscheibenpaares 2 und dem Bord 26 an der oberen Stapelscheibe 3 des unteren Stapelscheibenpaares 2 voll umlaufend auf. Bei einer Undichtigkeit der Lötverbindung am Bord 26 zwischen den Stapelscheiben 3, 4 kann das durch den Fluidkanal 5 geleitete Wasser nicht zu dem Heizverbund 20 gelangen, weil der Heizverbund 20 fluiddicht zwischen den beiden Stapelscheiben 2 angeordnet ist. Es ist hier damit eine Trennung von der Fluid- bzw. Wasserseite am Fluidkanal 5 zu dem Heizverbund 20 gegeben, so dass eine Undichtigkeit an dem Fluidkanal 5 lediglich dazu führt, dass das Wasser nach außen und nicht zu dem Heizverbund 20 eindringt.

Die Stapelscheiben 3, 4 weisen eine Länge zwischen 100 und 400 mm und eine Breite zwischen 50 mm und 300 mm auf. Der Fluidkanal 5 weist eine Höhe, d. h. eine Ausdehnung senkrecht zu der fiktiven Eben 12, zwischen 3 mm und 30 mm auf. Ein Aufnahmeraum zwischen den beiden Stapelscheibenpaaren 2 mit dem Heizverbund weist die Höhe zwischen 3 mm und 30 mm auf. Die Stapelscheiben 3, 4 weisen eine Dicke von 0,5 mm bis 3 mm auf. Die Dicke der Leiterplatten 14 liegt zwischen 0,3 mm und 2 mm und die Dicke der Isolierplatten 19 liegt zwischen 0,05 mm und 2 mm.

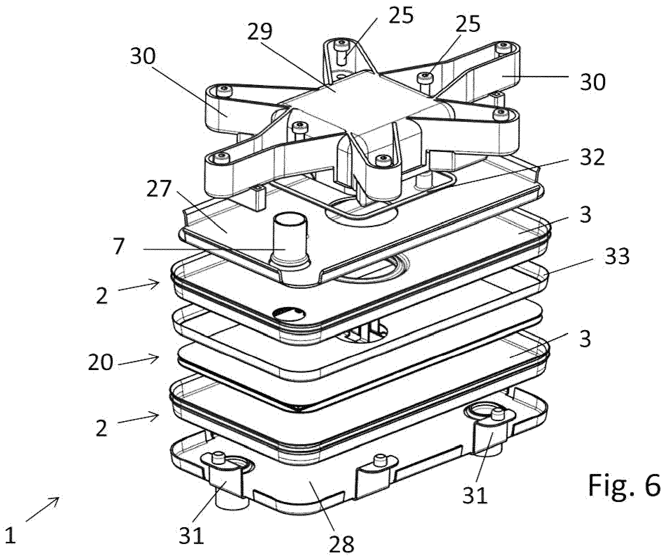

In Fig. 6 ist ein zweites Ausführungsbeispiel des Wärmeübertragers 1 dargestellt. Im Nachfolgenden werden im Wesentlichen nur die Unterschiede zu dem ersten Ausführungsbeispiel gemäß Fig. 1 bis 5 beschrieben. An dem Leistungselektronikgehäuse 29 sind einteilig Verbindungsarme 30 aus Kunststoff ausgebildet. Ferner weist auch die untere Adapterplatte 28 aus Aluminium Verbindungsarme 31 aus Aluminium auf, welche einteilig mit der unteren Adapterplatte 28 ausgebildet sind. Mit Schrauben 25 kann dadurch das Leistungselektronikgehäuse 29 und auch damit die an dem Leistungselektronikgehäuse 29 angeordnete obere Adapterplatte 27 mit der unteren Adapterplatte 28 unter einer Druckspannung vorgespannt werden. Die Druckspannung ist dabei senkrecht zu der fiktiven Ebene 12 ausgerichtet. Dadurch können zusätzlich oder ausschließlich die Stapelscheiben 3, 4 und die Adapterplatten 27, 28 form- und/oder kraftschlüssig miteinander verbunden werden. Beispielsweise kann zwischen den Stapelscheiben 3, 4 ein umlaufender Dichtring an dem Bord 26 zur fluiddichten Abdichtung des Fluidkanales 5 angeordnet sein. Dies gilt in analoger Weise auch zur Abdichtung des Heizverbundes 20 zwischen den beiden Stapelscheibenpaaren 2. Abweichend hiervon können im zweiten Ausführungsbeispiel gemäß Fig. 6 auch wie im ersten Ausführungsbeispiel gemäß den Fig. 1 bis 5 die Stapelscheiben 3, 4 der Stapelscheibenpaare 2 stoffschlüssig durch eine Lötverbindung, insbesondere ausschließlich, miteinander verbunden sein.

Der in den Fig. 1 bis 6 dargestellte Wärmeübertrager 1 im ersten und zweiten Ausführungsbeispiel kann zusätzlich, vorzugsweise vollständig, insbesondere fluiddicht, in einem nicht dargestellten Wärmeübertragergehäuse, z. B. aus Kunststoff oder Metall, angeordnet sein. Dadurch kann der gesamte Wärmeübertrager 1 zusätzlich vor mechanischen Einflüssen geschützt werden und/oder bei einer Ausführung des Wärmeübertragergehäuses aus Kunststoff wird eine zusätzliche elektrische Isolierung des Wärmeübertragers 1 zur Verfügung gestellt.

Insgesamt betrachtet sind mit dem erfindungsgemäßen Wärmeübertrager 1 in Scheibenbauweise als elektrische Heizeinrichtung zum Erwärmen eines Fluides wesentliche Vorteile verbunden. Der Wärmeübertrager 1 mit dem nur einen Fluidkanal 5 ist in der Herstellung einfach und preiswert und weist einen kompakten Aufbau auf. Er kann mit Hochspannung von mehr als 60 V betrieben werden und der Heizverbund 20 ist wasser- und staubdicht bzw. der Umgebung abgedichtet.

### Bezugszeichenliste

1 Wärmeübertrager
2 Stapelscheibenpaar
3 Obere Stapelscheibe
4 Untere Stapelscheibe
5 Fluidkanal
6 Einlassöffnung
7 Einlassstutzen
8 Auslassöffnung
9 Auslassstutzen
10 Elektrisches Widerstandsheizelement
11 PTC-Element
12 Fiktive Ebene
13 Leiter
14 Leiterplatte
15 Kontaktelektrode
16 Turbulenzeinlage
17 Turbulenzblech
18 Elektrisches Isolierelement
19 Isolierplatte
20 Heizverbund
21 Öffnung in Stapelscheibenpaar, Adapterplatte, Turbulenzeinlage
22 Sicke an Öffnung von Stapelscheibe
23 Verbindungselement
24 Schraubverbindung
25 Schraube
26 Bord an Rand von Stapelscheibe und Adapterplatte
27 Obere Adapterplatte
28 Untere Adapterplatte
29 Leistungselektronikgehäuse
30 Verbindungsarm an Leistungselektronikgehäuse
31 Verbindungsarm an unterer Adapterplatte
32 Dichtung an Leistungselektronikgehäuse
33 Klebstoffdichtring zwischen den beiden Stapelscheibenpaaren

## Patentansprüche

1. Wärmeübertrager (1) in Scheibenbauweise, umfassend wenigstens ein Stapelscheibenpaar (2) mit je zwei im Wesentlichen parallel zueinander ausgerichteten Stapelscheiben (3, 4), so dass zwischen den je zwei Stapelscheiben (3, 4) ein fluiddichter Fluidkanal (5) eingeschlossen ist zum Durchleiten eines Fluides, insbesondere Wasser, wobei jede Stapelscheibe eine im Wesentlichen ebene Gestalt mit einem Randbereich mit einem Bord aufweist, wobei die zwei Stapelscheiben eines Stapelscheibenpaars nur an dem Bord aufeinanderliegen, eine Ein- und Auslassöffnung (6, 8) für das Fluid, wobei der Wärmeübertrager (1) wenigstens ein elektrisches Widerstandsheizelement (10) umfasst und das wenigstens eine elektrische Widerstandsheizelement (10) thermisch mit der Stapelscheibe (3, 4) und mechanisch mittelbar oder unmittelbar mit der Stapelscheibe (3, 4) verbunden ist, so dass mit dem elektrischen Widerstandsheizelement (10) das Fluid erwärmbar ist, das wenigstens eine elektrische Widerstandsheizelement (10) ein PTC-Element (11) ist, das wenigstens eine elektrische Widerstandsheizelement (10) scheibenförmig ist und eine von dem wenigstens einen elektrischen Widerstandsheizelement (10) aufgespannte fiktive Ebene (12) im Wesentlichen parallel zu einer von den Stapelscheiben (3, 4) aufgespannten fiktiven Ebene (12) ausgerichtet ist, der Wärmeübertrager (1) wenigstens zwei mit dem wenigstens einen elektrischen Widerstandsheizelement (10) elektrisch verbundene Leiter (13), insbesondere Leiterplatten (14), umfasst, um elektrischen Strom durch das wenigstens eine elektrische Widerstandsheizelement (10) zu leiten und dadurch das elektrische Widerstandsheizelement (10) zu erwärmen, wobei die zwei Stapelscheiben (3, 4) des wenigstens einen Stapelscheibenpaares (2) mit einer Lötverbindung miteinander fluiddicht verbunden sind und der Wärmeübertrager (1) wenigstens ein elektrisches Isolierelement (18), insbesondere eine Isolierplatte (19), umfasst welches die wenigstens zwei Leiter (13) und vorzugsweise das wenigstens eine elektrische Widerstandsheizelement (10) elektrisch isoliert.

2. Wärmeübertrager nach Anspruch 1, **dadurch gekennzeichnet, dass** zwischen den beiden Stapelscheiben (3, 4) des wenigstens einen Stapelscheibenpaares (2) eine Turbulenzeinlage (16), z. B. ein Turbulenzblech (17), angeordnet ist.

3. Wärmeübertrager nach Anspruch 1 oder 2, **dadurch gekennzeichnet, dass** eine von den Leiterplatten (14) aufgespannte fiktive Ebene (12) und/oder eine von der wenigstens einen Isolierplatte (19) aufgespannte fiktive Ebene (12) im Wesentlichen parallel zu einer von den Stapelscheiben (3, 4) aufgespannten fiktiven Ebene (12) ausgerichtet ist.

4. Wärmeübertrager nach Anspruch 1, 2 oder 3, **dadurch gekennzeichnet, dass** ein Heizverbund (20) mit dem wenigstens einen elektrischen Isolierelement (18), den wenigstens zwei Leitern (13) und dem wenigstens einen elektrischen Widerstandsheizelement (10) außenseitig an einer Stapelscheibe (3, 4) außerhalb des Fluidkanales (5) angeordnet ist, vorzugsweise wenigstens ein elektrisches Isolierelement (18) außenseitig auf einer Stapelscheibe (3, 4) aufliegt.

5. Wärmeübertrager nach einem oder mehreren der Ansprüche 1 bis 4, **dadurch gekennzeichnet, dass** das wenigstens eine elektrische Widerstandsheizelement (10) zwischen zwei Leitern (13) angeordnet ist und die zwei Leiter (13) zwischen wenigstens zwei elektrischen Isolierelementen (18) angeordnet sind.

6. Wärmeübertrager nach einem oder mehreren der vorhergehenden Ansprüche, **dadurch gekennzeichnet, dass** die Ausdehnung des wenigstens einen elektrischen Widerstandsheizelementes (10) oder die Summe der Ausdehnungen von wenigstens zwei elektrischen Widerstandsheizelementen (10) in einer ersten und zweiten Richtung, wobei die erste und zweite Richtung parallel zu einer von den Stapelscheiben (3, 4) aufgespannten fiktiven Ebene (12) ausgerichtet sind und die erste und zweite Richtung senkrecht zueinander ausgerichtet sind, wenigstens 50%, 60% oder 80% der Ausdehnung der Stapelscheiben (3, 4) in der ersten und zweiten Richtung beträgt.

7. Wärmeübertrager nach einem oder mehreren der vorhergehenden Ansprüche, **dadurch gekennzeichnet, dass** die Ausdehnung des Fluidkanales (5) in Richtung einer von den Stapelscheiben (3, 4) aufgespannten fiktiven Ebene (12) wesentlich größer, z. B. um das 2-, 3-, 5- oder 10-Fache größer, ist als die Ausdehnung des Fluidkanales (5) senkrecht zu der von den Stapelscheiben (3, 4) aufgespannten fiktiven Ebene (12).

8. Wärmeübertrager nach einem oder mehreren der vorhergehenden Ansprüche, **dadurch gekennzeichnet, dass** das wenigstens eine elektrische Widerstandsheizelement (10), insbesondere der Heizverbund (20), zwischen zwei Stapelscheibenpaaren (3, 4) angeordnet ist und das elektrische Widerstandsheizelement (10) thermisch und/oder mechanisch mit den zwei Stapelscheibenpaaren (2) verbunden ist und vorzugsweise das wenigstens eine elektrische Widerstandsheizelement (10), insbesondere der Heizverbund (20), zwischen den zwei Stapelscheibenpaaren (2) fluiddicht bezüglich der Umgebung eingeschlossen ist.

9. Wärmeübertrager nach einem oder mehreren der vorhergehenden Ansprüche, **dadurch gekennzeichnet, dass** ein Stapelscheibenpaar (2) eine Öffnung (21) aufweist und durch die Öffnung (21) wenigstens zwei Kontaktelektroden (15) zur elektrischen Kontaktierung der wenigstens zwei Leiter (13) geführt sind.

10. Wärmeübertrager nach Anspruch 8 oder 9, **dadurch gekennzeichnet, dass** die zwei Stapelscheibenpaare (2) stoffschlüssig, z. B. mit einer Klebe- oder Silikonverbindung, und/oder form- und/oder kraftschlüssig aufgrund einer Druckkraft zwischen den beiden Stapelscheibenpaaren (2) miteinander verbunden sind und vorzugsweise die Druckkraft mit wenigstens einem Verbindungselement (23), z. B. einer Schraub- oder Nietverbindung (24), zwischen den beiden Stapelscheibenpaaren (2) aufgebracht ist.

11. Wärmeübertrager nach einem oder mehreren der vorhergehenden Ansprüche, **dadurch gekennzeichnet, dass** an dem Stapelscheibenpaar (2) mit der Öffnung (21) eine Leistungselektronik mit einem Leistungselektronikgehäuse (29) angeordnet ist und vorzugsweise zwischen der Leistungselektronik und einer Stapelscheibe (3, 4) des Stapelscheibenpaares (2) mit der Öffnung (21) eine Adapterplatte (27, 28) angeordnet ist.

12. Kraftfahrzeugklimaanlage, umfassend
- ein Gehäuse,
- ein Gebläse,
- einen Luft-Wasser-Wärmeübertrager zur Erwärmung der Luft mit durch den Luft-Wasser-Wasserwärmeübertrager geleitetem Wasser,
- vorzugsweise einen Wasserkreislauf,
- vorzugsweise einen Kältemittelverdampfer zum Kühlen der Luft,
- vorzugsweise eine Luftklappe,
- vorzugsweise einen von dem Gehäuse begrenzten Luftkanal,
**dadurch gekennzeichnet, dass**
die Kraftfahrzeugklimaanlage einen Wärmeübertrager (1) gemäß einem oder mehreren der vorhergehenden Ansprüche umfasst und mit dem Wärmeübertrager (1) das durch den Luft-Wasser-Wärmeübertrager geleitete Wasser erwärmbar ist, insbesondere indem mit dem Wasserkreislauf das Wasser durch den Wärmeübertrager (1) gemäß einem oder mehreren der vorhergehenden Ansprüche und den Luft-Wasser-Wärmeübertrager leitbar ist, z. B. mit einer Pumpe.

## Claims

1. A plate-type heat exchanger (1), comprising at least one stacked plate pair (2), each having two stacked plates (3, 4) which are aligned substantially parallel to each other, so that a fluid-tight fluid channel (5) for the throughflow of a fluid, in particular water, is comprised between two respective stacked plates (3, 4), wherein each stacked plate has a substantially flat form with an edge area with a rim, wherein the two stacked plates of a stacked plate pair only lie on each other on the rim, an inlet and outlet opening (6, 8) for the fluid, wherein the heat exchanger (1) comprises at least one electric resistance heating element (10) and the at least one electric resistance heating element (10) is thermally connected to the stacked plate (3, 4) and indirectly or directly mechanically connected to the stacked plate (3, 4), so that the fluid can be heated by means of the electric resistance heating element (10), wherein the at least one electric resistance heating element (10) is a PTC element (11), wherein the at least one electric resistance heating element (10) is disc-shaped and a fictitious plane (12) spanned by the at least one electric resistance heating element (10) is substantially aligned parallel to a fictitious plane (12) spanned by one of the stacked plates (3, 4), wherein the heat exchanger (1) comprises at least two conductors (13) which are electrically connected to the at least one electric resistance heating element (10), in particular conductor plates (14), in order to conduct electric current through the at least one electric resistance heating element (10) and thus heat the electric resistance heating element (10), wherein the two stacked plates (3, 4) of the at least one stacked plate pair (2) are connected to each other in a fluid-tight manner by means of a soldered connection and the heat exchanger (1) comprises at least one electric insulation element (18), in particular an insulation plate (19), which electrically insulates the at least two conductors (13) and preferably the at least one electric resistance heating element (10) .

2. The heat exchanger according to claim 1, **characterised in that** a turbulence insert (16), e.g. a turbulence sheet (17), is arranged between the two stacked plates (3, 4) of the at least one stacked plate pair (2).

3. The heat exchanger according to claim 1 or 2, **characterised in that** a fictitious plane (12) spanned by the conductor plates (14) and/or a fictitious plane (12) spanned by the at least one insulation plate (19) is substantially aligned parallel to a fictitious plane (12) spanned by the stacked plates (3, 4).

4. The heat exchanger according to claim 1, 2 or 3, **characterised in that** a heating network (20) is arranged with the at least one electric insulation element (18), the at least two conductors (13) and the at least one electric resistance heating element (10) on the outside of a stacked plate (3, 4) outside of the fluid channel (5), wherein preferably at least one electric insulation element (18) lies on the outside of a stacked plate (3, 4).

5. The heat exchanger according to one or more of claims 1 to 4, **characterised in that** the at least one electric resistance heating element (10) is arranged between two conductors (13) and the two conductors (13) are arranged between at least two electric insulation elements (18).

6. The heat exchanger according to one or more of the preceding claims, **characterised in that** the expansion of the at least one electric resistance heating element (10) or the sum of expansions of at least two electric resistance heating elements (10) in a first and second direction, wherein the first and second direction are aligned parallel to a fictitious plane (12) spanned by one of the stacked plates (3, 4) and the first and second direction are aligned perpendicular to each other, is at least 50%, 60% or 80% of the expansion of the stacked plates (3, 4) in the first and second direction.

7. The heat exchanger according to one or more of the preceding claims, **characterised in that** the expansion of the fluid channel (5) in the direction of a fictitious plane (12) spanned by one of the stacked plates (3, 4) is substantially larger, e.g. 2, 3, 5 or 10 times larger than the expansion of the fluid channel (5) perpendicular to the fictitious plane (12) spanned by the stacked plates (3, 4).

8. The heat exchanger according to one or more of the preceding claims, **characterised in that** the at least one electric resistance heating element (10), in particular the heating network (20), is arranged between two stacked plate pairs (3, 4) and the electric resistance heating element (10) is thermally and/or mechanically connected to the two stacked plate pairs (2) and the at least one electric resistance heating element (10), in particular the heating network (20), is preferably comprised between the two stacked plate pairs (2) in a fluid-tight manner with regard to the environment.

9. The heat exchanger according to one or more of the preceding claims, **characterised in that** a stacked plate pair (2) has an opening (21) and at least two contact electrodes (15) for the electrical contact of the at least two conductors (13) are fed through the opening (21).

10. The heat exchanger according to claim 8 or 9, **characterised in that** the two stacked plate pairs (2) are connected to each other in a firmly bonded manner, e.g. by means of a glue or silicone connection, and/or in a form-fit and/or force-fit manner due to a pressure force between the two stacked plate pairs (2) and the pressure force is preferably applied between the two stacked plate pairs (2) by means of at least one connection element (23), e.g. a screw or rivet connection (24).

11. The heat exchanger according to one or more of the preceding claims, **characterised in that** a power electronics with a power electronics housing (29) is arranged on the stacked plate pair (2) with the opening (21) and preferably an adapter plate (27, 28) is arranged between the power electronics and a stacked plate (3, 4) of the stacked plate pair (2) with the opening (21).

12. A vehicle air-conditioning system, comprising
- a housing,
- a fan,
- an air/water heat exchanger for heating the air with water guided through the air/water heat exchanger,
- preferably a water circuit,
- preferably a coolant evaporator for cooling the air,
- preferably an air flap,
- preferably an air channel delimited by the housing,
**characterised in that**
the motor vehicle air-conditioning system comprises a heat exchanger (1) according to one or more of the preceding claims and the water guided through the air/water heat exchanger can be heated by means of the heat exchanger (1), in particular by being able to guide the water through the heat exchanger (1) according to one or more of the preceding claims and the air/water heat exchanger by means of the water circuit, e.g. by means of a pump.

## Revendications

1. Echangeur de chaleur (1) du type à plaques, comprenant au moins une paire de plaques empilées (2) ayant à chaque fois deux plaques empilées (3, 4) orientées en étant pratiquement parallèles l'une à l'autre, de sorte qu'un conduit de fluide (5), étanche aux fluides, est enfermé à chaque fois entre les deux plaques empilées (3, 4), ledit conduit servant à la circulation d'un fluide, en particulier de l'eau, où chaque plaque empilée présente une forme pratiquement plane comportant une zone de contour ayant un bord, où les deux plaques empilées d'une paire de plaques empilées se superposent seulement au niveau du bord, la plaque empilée présentant une ouverture d'entrée et de sortie (6, 8) pour le fluide, où l'échangeur de chaleur (1) comprend au moins un élément chauffant à résistance électrique (10), et l'élément chauffant à résistance électrique (10) au moins au nombre de un est relié thermiquement à la plaque empilée (3, 4) et relié mécaniquement, de façon indirecte ou directe, à la plaque empilée (3, 4), de sorte que le fluide peut être chauffé avec l'élément chauffant à résistance électrique (10), l'élément chauffant à résistance électrique (10) au moins au nombre de un étant un élément (11) à coefficient de température positif - CTP -, l'élément chauffant à résistance électrique (10) au moins au nombre de un est en forme de plaque, et un plan fictif (12) défini par l'élément chauffant à résistance électrique (10) au moins au nombre de un est orienté pratiquement de façon parallèle à un plan fictif (12) défini par les plaques empilées (3, 4), l'échangeur de chaleur (1) comprend au moins deux conducteurs (13), en particulier des plaques conductrices (14), relié(e)s électriquement à l'élément chauffant à résistance électrique (10) au moins au nombre de un, pour faire circuler du courant électrique à travers l'élément chauffant à résistance électrique (10) au moins au nombre de un et pour, de cette manière, chauffer l'élément chauffant à résistance électrique (10), où les deux plaques empilées (3, 4) de la paire de plaques empilées (2) au moins au nombre de un sont reliées l'une à l'autre, de façon étanche aux fluides, par un assemblage brasé, et l'échangeur de chaleur (1) comprend au moins un élément isolant électrique (18), en particulier une plaque isolante (19), élément isolant qui isole électriquement les conducteurs (13) au moins au nombre de deux et, de préférence, l'élément chauffant à résistance électrique (10) au moins au nombre de un.

2. Echangeur de chaleur selon la revendication 1, **caractérisé en ce qu'**une pièce intercalaire générant des turbulences (16), par exemple une tôle générant des turbulences (17), est disposée entre les deux plaques empilées (3, 4) de la paire de plaques empilées (2) au moins au nombre de un.

3. Echangeur de chaleur selon la revendication 1 ou 2, **caractérisé en ce qu'**un plan fictif (12) défini par les plaques conductrices (14) et / ou un plan fictif (12) défini par la plaque isolante (19) au moins au nombre de un est orienté pratiquement de façon parallèle à un plan fictif (12) défini par les plaques empilées (3, 4).

4. Echangeur de chaleur selon la revendication 1, 2 ou 3, **caractérisé en ce qu'**un ensemble chauffant assemblé (20) comprenant l'élément isolant électrique (18) au moins au nombre de un, les conducteurs (13) au moins au nombre de deux et l'élément chauffant à résistance électrique (10) au moins au nombre de un est disposé, côté extérieur, sur une plaque empilée (3, 4) située à l'extérieur du conduit de fluide (5), de préférence au moins un élément isolant électrique (18) venant en appui, côté extérieur, sur une plaque empilée (3, 4).

5. Echangeur de chaleur selon l'une quelconque ou plusieurs des revendications 1 à 4, **caractérisé en ce que** l'élément chauffant à résistance électrique (10) au moins au nombre de un est disposé entre deux conducteurs (13), et les deux conducteurs (13) sont disposés entre au moins deux éléments isolants électriques (18).

6. Echangeur de chaleur selon l'une quelconque ou plusieurs des revendications précédentes, **caractérisé en ce que** l'étendue de l'élément chauffant à résistance électrique (10) au moins au nombre de un ou la somme des étendues d'au moins deux éléments chauffants à résistance électrique (10), dans une première et une seconde direction, est égale à au moins 50 %, 60 % ou 80 % de l'étendue des plaques empilées (3, 4) dans la première et la seconde direction, où la première et la seconde direction sont orientées parallèlement à un plan fictif (12) défini par les plaques empilées (3, 4), et la première et la seconde direction sont orientées de façon perpendiculaire l'une par rapport à l'autre.

7. Echangeur de chaleur selon l'une quelconque ou plusieurs des revendications précédentes, **caractérisé en ce que** l'étendue du conduit de fluide (5), en direction d'un plan fictif (12) défini par les plaques empilées (3, 4), est nettement plus grande, par exemple 2, 3, 5 ou 10 fois plus grande que l'étendue du conduit de fluide (5) disposé de façon perpendiculaire au plan fictif (12) défini par les plaques empilées (3, 4).

8. Echangeur de chaleur selon l'une quelconque ou plusieurs des revendications précédentes, **caractérisé en ce que** l'élément chauffant à résistance électrique (10) au moins au nombre de un, en particulier l'ensemble chauffant assemblé (20), est disposé entre deux paires de plaques empilées (3, 4), et l'élément chauffant à résistance électrique (10) est relié thermiquement et / ou mécaniquement aux deux paires de plaques empilées (2) et, de préférence, l'élément chauffant à résistance électrique (10) au moins au nombre de un, en particulier l'ensemble chauffant assemblé (20), est enfermé entre les deux paires de plaques empilées (2), en étant étanche aux fluides par rapport au milieu environnant.

9. Echangeur de chaleur selon l'une quelconque ou plusieurs des revendications précédentes, **caractérisé en ce qu'**une paire de plaques empilées (2) présente une ouverture (21), et au moins deux électrodes de contact (15) servant à la mise en contact électrique des conducteurs (13) au moins au nombre de deux sont guidées à travers l'ouverture (21).

10. Echangeur de chaleur selon la revendication 8 ou 9, **caractérisé en ce que** les deux paires de plaques empilées (2) sont reliées l'une à l'autre par continuité de matière, par exemple avec un assemblage collé ou avec un composé à base de silicone et / ou assemblées l'une à l'autre par complémentarité de forme et / ou par action de force sous l'effet d'une force de pression s'exerçant entre les deux paires de plaques empilées (2) et, de préférence, la force de pression est appliquée entre les deux paires de plaques empilées (2), avec au moins un élément d'assemblage (23), par exemple d'un assemblage à vis ou à rivets (24).

11. Echangeur de chaleur selon l'une quelconque ou plusieurs des revendications précédentes, **caractérisé en ce qu'**une électronique de puissance comprenant un boîtier d'électronique de puissance (29) est disposée sur la paire de plaques empilées (2) comportant l'ouverture (21), et une plaque adaptatrice (27, 28) est disposée de préférence entre l'électronique de puissance et une plaque empilée (3, 4) de la paire de plaques empilées (2) comportant l'ouverture (21).

12. Système de climatisation d'un véhicule automobile, comprenant :
- un carter,
- un pulseur,
- un échangeur de chaleur air / eau servant au chauffage de l'air avec de l'eau circulant à travers l'échangeur de chaleur air / eau,
- de préférence un circuit d'eau,
- de préférence un évaporateur de fluide frigorigène servant au refroidissement de l'air,
- de préférence un volet d'air,
- de préférence un conduit d'air délimité par le carter,
**caractérisé**
**en ce que** le système de climatisation du véhicule comprend un échangeur de chaleur (1) selon l'une quelconque ou plusieurs des revendications précédentes, et **en ce que** l'eau dirigée à travers l'échangeur de chaleur air / eau peut être chauffée avec l'échangeur de chaleur (1), en particulier quand l'eau, avec le circuit d'eau, peut être dirigée à travers l'échangeur de chaleur (1) selon l'une quelconque ou plusieurs des revendications précédentes, et qu'elle peut être dirigée à travers l'échangeur de chaleur air /eau, par exemple grâce à une pompe.
